# EUROPÄISCHE PATENTSCHRIFT

(11) **EP 1 004 483 B1**
(45) Veröffentlichungstag und Bekanntmachung des Hinweises auf die Patenterteilung: **20.04.2005**
(21) Anmeldenummer: 99121770.4
(22) Anmeldetag: 03.11.1999
(51) Int. Cl.: B60R 21/26

(54) **Mehrstufiger Gasgenerator**
Multistage gas generator
Générateur de gaz à niveaux multiples

(30) Priorität: 28.11.1998 DE 19855077
(43) Veröffentlichungstag der Anmeldung: 31.05.2000
(73) Patentinhaber: Conti Temic microelectronic GmbH, 90411 Nürnberg (DE)
(72) Erfinder: Fendt, Günter, 86529 Schrobenhausen (DE); Steurer, Helmut, 85302 Junkenhofen (DE); Steiner, Peter, Dr., 86529 Schrobenhausen (DE); Vogl, Armin, 86551 Aichach (DE)

(56) Entgegenhaltungen:
- DE-A- 19 541 584
- DE-A- 19 611 102
- DE-A- 19 611 384

## Beschreibung

Die vorliegende Erfindung betrifft einen Gasgenerator zum Erzeugen einer zum Aufblasen eines Airbags vorgesehenen Treibgasmischung in insgesamt n≥2 Stufen, denen jeweils eine Brennkammer mit einer zündbaren Treibstoffladung zugeordnet ist.

Ein derartiger Gasgenerator ist beispielsweise durch die europäische Patentanmeldung EP 0 733 519 A2 und die gattunsgbildende DE 19 611 384 A bekanntgeworden.

Gasgeneratoren dienen dazu, im Falle eines harten Aufpralls eines Kraftfahrzeugs eine Treibgasmischung zum Füllen eines Luftsackes (Airbag) zu erzeugen. Der Luftsack schützt einen Fahrzeuginsassen vor dem Aufprall auf harte Fahrzeuginnenteile wie das Lenkrad oder die Seitenverkleidungen. Innerhalb dieser Gasgeneratoren ist im allgemeinen eine auf pyrotechnische Art zu entzündende Treibstoffladung vorgesehen. Wenn durch einen Stromimpuls von der einen Fahrzeugcrash erkennenden Sensorik eine Anzündeinheit aktiviert wird, werden heiße Partikel erzeugt, die dann auf die Oberfläche der meist in Tablettenform vorliegenden Treibstoffladung auftreffen. Diese wird dann selbst entzündet, brennt in der sogenannten Brennkammer unter einem hohen Druck ab und erzeugt die Treibgasmischung. Die Treibgasmischung strömt aus der Brennkammer aus und mischt sich mit einem inerten Vorratsgas, so daß innerhalb der sogenannten Vorratskammer ebenfalls ein hoher Druck entsteht, der eine Bersteinrichtung zum Zerbrechen bringt. Anschließend kann die Treibgasmischung aus dem Gasgenerator ausströmen und den Luftsack aufblasen. Es entsteht keine reine Treibgasmischung, sondern eine Mischung aus flüssigen und festen Bestandteilen, die nach Verlassen der Vorratskammer durch eine Filterkammer geleitet wird. Die Treibgasmischung wird vor dem Austritt aus dem Gasgenerator gereinigt.

Der mehrstufige Gasgenerator ist Grundvoraussetzung für einen sogenannten Smartbag, der den Unfallumständen entsprechend dosiert gezündet werden kann.

Der obengenannten europäischen Patentanmeldung ist zu entnehmen, daß ein Gasgenerator zwei getrennte Brennkammern aufweisen kann. Eine Steuereinheit bestimmt im Falle eines Fahrzeugaufpralls, ob die Treibstoffladung innerhalb der einen oder der anderen oder in beiden Brennkammern aktiviert und gezündet werden soll. Die beiden Brennkammern unterscheiden sich hinsichtlich ihrer Größe deutlich, so daß die erzeugte Treibgasmischung nicht feinfühlig abgestuft zustandekommen kann.

Es wird beim Einsatz anderer bekannter Gasgeneratoren vorgeschlagen, Ausströmvorrichtungen der Treibgasmischung zu verändern, um das Volumen der Treibgasmischung einstellen zu können. Dies erfordert jedoch einen erheblichen Aufwand für die Steuerung und Regelung der Ausströmvorrichtungen. Zudem ist ein schnelles Entfalten und Aufblasen des Airbags durch die Beeinflussung der Ausströmöffnungen unter Umständen nicht mehr gegeben.

Der vorliegenden Erfindung liegt daher die Aufgabe zugrunde, einen möglichst einfach aufgebauten Gasgenerator zu entwikkeln, durch dessen Verwendung ein nahezu stufenloses variables Aufblasen eines Airbags zuverlässig gewährleistet wird.

Diese Aufgabe wird durch einen mehrstufigen Gasgenerator gelöst, dessen von den Treibstoffladungen aller n Stufen erzeugbares Treibgasvolumen in 2ⁿ -1 untereinander gleich große Volumeneinheiten (16) unterteilt ist und die Treibstoffladungen der einzelnen Stufen derart abgestuft sind, daß das von der x-ten Stufe erzeugte Treibgasvolumen näherungsweise 2^{n-x} Volumeneinheiten (16) umfaßt, wobei x∈[1...n] und x ganzzahlig ist. Es entsteht eine binäre Abstufung der Treibgasvolumina der einzelnen Stufen mit der Möglichkeit, alle beliebigen Kombinationen daraus zu zünden.

In den Rahmen der vorliegenden Erfindungen fallen auch geringfügige Abweichungen von Faktoren um 2, um die Treibgasvolumina zu bestimmen. Das Treibgasvolumen wird durch entsprechende Dimensionierung der Treibladungsmengen eingestellt, wobei selbstverständlich aufgrund der natürlichen Schwankungen in der Zusammensetzung und Beschaffenheit der Treibladungen diese leichten Abweichungen vom Faktor 2 zwischen den einzelnen Stufen auftreten können. Teilweise kann auch über das Brennkammervolumen die darin einzufüllende Treibladungsmenge reguliert und dementsprechend die Brennkammervolumina ebenfalls binär abgestuft werden. Besonders bevorzugt ist es, n ≥ 3 zu wählen, um die Kombinationsmöglichkeiten der Stufen zu erhöhen.

Mit Hilfe des erfindungsgemäßen Gasgenerators kann ein Airbag schnell entfaltet und aufgeblasen werden. Die notwendige Feindosierung ergibt sich daraus, daß die einzelnen Brennkammern 1 bis n ein aufeinander abgestimmtes einzelnes Treibgasvolumen besitzen. Mittels einer Quantifizierung der einzelnen Treibgasvolumen durch eine Potenzierung der Zahl 2 läßt sich ein Gasgenerator ausbilden, der 1 bis n Stufen in sich birgt. Die Nutzung beziehungsweise Ansteuerung dieser Anordnung geschieht über die einzelnen Aktuatoren (Anzündeinheiten).

Ein Vorteil der Erfindung liegt in der hohen Auflösung des Gesamtvolumens aller Brennkammern in Teilvolumina und die nach wie vor schnelle Gewinnung eines Basisvolumens des für eine bestimmte Unfallsituation vorgesehenen Gesamtvolumens. Es gibt kaum einen Zeitverlust aus dem Aufblasvorgang gegenüber jetzigen Systemen jedoch ist die Aggressivität des Aufblasvorgangs erheblich gemildert. Der vorgeschlagene Gasgenerator kann darüber hinaus flexibler eingesetzt werden. Die einzelnen Brennkammern lassen sich unterschiedlich miteinander kombinieren, so daß fein aufeinander abgestufte nutzbare Treibgasvolumina entstehen können.

Bei einer bevorzugten Ausführungsform ist die Treibstoffladung der größten Brennkammer zuerst zündbar. Aus der Aufteilung der Volumina auf die einzelnen 1 bis n Stufen bzw. Brennkammern gemäß Patentanspruch 1 ergibt sich, daß die Brennkammer, der die Zahl n zugeordnet ist, das größte Treibgasvolumen besitzt. Im Falle, daß der Airbag aufgeblasen werden muß, wird durch Aktivierung der Treibstoffladung dieser Brennkammer gewährleistet, daß eine Minimalmenge erzeugt wird, um einen herkömmlichen Einkammerluftsack zur Entfaltung zu bringen und bis zu einer Basisgröße und Basishärte aufzublasen. Durch Zuschaltung der entsprechend kleineren anderen Brennkammern kann darauf aufbauend Größe und Härte des Airbags zusätzlich beeinflußt werden.

Es kann eine mit externen Sensoren verbundene Steuereinheit zur Betätigung eines oder mehrerer Anzündeeinheiten vorgesehen sein. Ein Gasgenerator dieser Ausführungsform kann die Kombination der einzelnen Brennkammern in Abhängigkeit von Parametern beeinflussen, die sich aus der Unfallsituation heraus ergeben.

Beispielsweise ist es sinnvoll, wenn ein Sensor zur Erfassung der Temperatur innerhalb der Brennkammer bei nichtaktivierter Treibstoffladung geeignet ist. Die Temperatur innerhalb der Brennkammer vor der Aktivierung der Treibstoffladung stellt eine Einflußgröße im Verhalten des Airbags dar. Bei sehr niedriger Temperatur innerhalb der Brennkammer muß die Gasgeneratorleistung erhöht werden, um das durch die niedrige Temperatur (Kälte) bedingte entstehende geringere Gasvolumen der Treibgasmischung auszugleichen. Folglich ist es vorteilhaft, wenn diese das Airbagverhalten beeinflussende Größe sensiert und in das Aufblasverhalten des Airbags integriert wird.

Ein weiterer bedeutender Aspekt ist das Gewicht des Fahrzeuginsassen. Es beeinflußt die Anforderung an das Aufblasverhalten entscheidend, weil schwergewichtige Fahrzeuginsassen unter Berücksichtigung einer Energiebetrachtung einen härteren Airbag benötigen als leichtere Fahrzeuginsassen. Der erfindungsgemäße Gasgenerator einer Variante soll deshalb einen Sensor zur Erfassung des Gewichtes des Fahrzeuginsassen besitzen.

Die Steuereinheit einer weiteren Ausführungsform des erfindungsgemäßen Gasgenerators umfaßt einen Sensor zur Erfassung der Position des Fahrzeuginsassen, insbesondere des Abstands des Fahrzeuginsassen zum Airbag. Wenn sich der Fahrzeuginsasse zu nah vor dem Airbag befindet, so kann der Airbag den Fahrzeuginsassen unter Umständen verletzen. Dies kann beispielsweise dann der Fall sein, wenn sich der Fahrzeuginsasse mit dem Handschuhfach beschäftigt, wenn der Unfall eintritt.

Zum Schutz des Fahrzeuginsassen soll der Airbag mit dem Gurtsystem des Fahrzeugs zusammenwirken können. Aus diesem Grund ist es auch vorteilhaft, wenn ein Sensor zur Erfassung des Gurtzustandes vorgesehen ist. Ein angegurteter Fahrzeuginsasse benötigt ein Airbag-Aufblasverhalten anderer Güte als ein nicht angegurteter Fahrzeuginsasse.

Weitere einen Fahrzeugunfall bestimmende Einflußgrößen, wie beispielsweise die Fahrzeuggeschwindigkeit, können ebenfalls in den Aufblasvorgang des Airbags integriert werden, weil ein Sensor zur Erfassung der Fahrzeuggeschwindigkeit bei einer weiteren Ausführungsform vorgesehen sein kann. Die Relativgeschwindigkeit des einen Fahrzeugs zu einem anderen an einem Fahrzeugunfall beteiligten Fahrzeug kann ebenso erfaßt werden wie die Eigengeschwindigkeit des Fahrzeugs.

Weitere Vorteile und Merkmale der Erfindung ergeben sich aus der Beschreibung eines bevorzugten Ausführungsbeispiels der Erfindung anhand der schematischen Zeichnung, deren Figuren zeigen:
- Fig. 1: eine dreidimensionale Darstellung des Aufbaus eines Gasgenerators;
- Fig. 2: eine Übersicht über Kombinationsmöglichkeiten einzelner Brennkammern des Gasgenerators nach Fig. 1;
- Fig. 3: weitere Ausgestaltungsmöglichkeit eines mehrstufigen Gasgenerators.

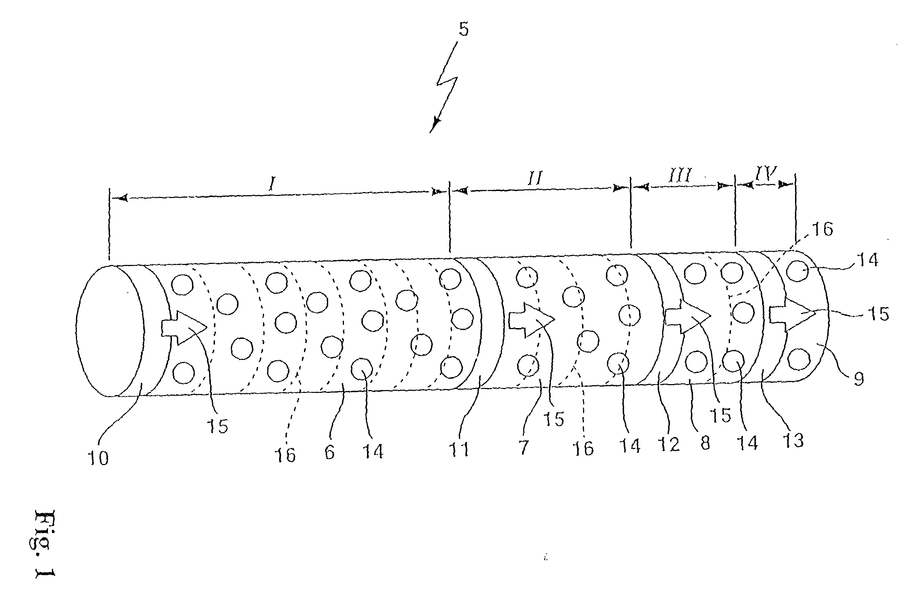

Aus der Fig. 1 ist der mehrstufige Aufbau mit insgesamt vier Stufen I bis IV (n=4) eines Gasgenerators 5 ersichtlich. Jede der Stufen I bis IV umfaßt eine Brennkammer 6 bis 9 und eine Anzündeinheit 10 bis 13. In den Brennkammern 6 bis 9 befinden sich Treibstoffladungen in Form von Treibstofftabletten 14. Pfeile 15 symbolisieren, daß ausgehend von den Anzündeinheiten 10 bis 13 die Treibstofftabletten 14 gezündet und abgebrannt werden können, um eine Treibgasmischung zu erzeugen, die einen Luftsack (Airbag) aufblasen kann. Das Aufblasen des Luftsackes geschieht in bekannter Weise, so daß diese näheren Einzelheiten in der Figur nicht dargestellt sind.

Die Nutzung beziehungsweise Ansteuerung dieser Anordnung des Gasgenerators 5 soll nun näher beschrieben werden. Im Falle eines Fahrzeugunfalls wird zunächst mittels der Anzündeinheit 10 die Treibstoffladung der Stufe I aktiviert. Durch den Abbrand der Treibstoffladung 14 der Stufe I entsteht eine Minimalmenge einer Treibgasmischung, die zum Aufblasen eines herkömmlichen Einkammerluftsackes notwendig ist. Die Treibgasmischung kann diesen entfalten und bis zu einer Basisgröße und Basishärte aufblasen. Die Brennstoffkammer 6 der Stufe I weist insgesamt acht Volumeneinheiten 16 (2ⁿ⁻¹=2⁴⁻¹ =8) auf, so daß die Brennkammer 6 der Stufe I doppelt so groß ist wie die Brennkammer 7 der Stufe II (2⁴⁻² Volumeneinheiten 16). Ebenso ist die Brennkammer 7 wiederum doppelt so groß wie die Brennkammer 8 (Stufe III) (2¹ Volumeneinheiten 16). Die Brennkammer 8 weist die doppelte Größe der Brennkammer 9 (Stufe IV) (2⁰ Volumeneinheit 16) auf. Je nach Zuschaltung der Brennkammern 7 bis 9 der Stufen II bis IV zu der Stufe I können unterschiedliche Treibgasvolumina erreicht werden. Die einzelnen Kombinationsmöglichkeiten ermöglichen es, eine feindosierte Abstufung der Treibgasvolumina durchzuführen.

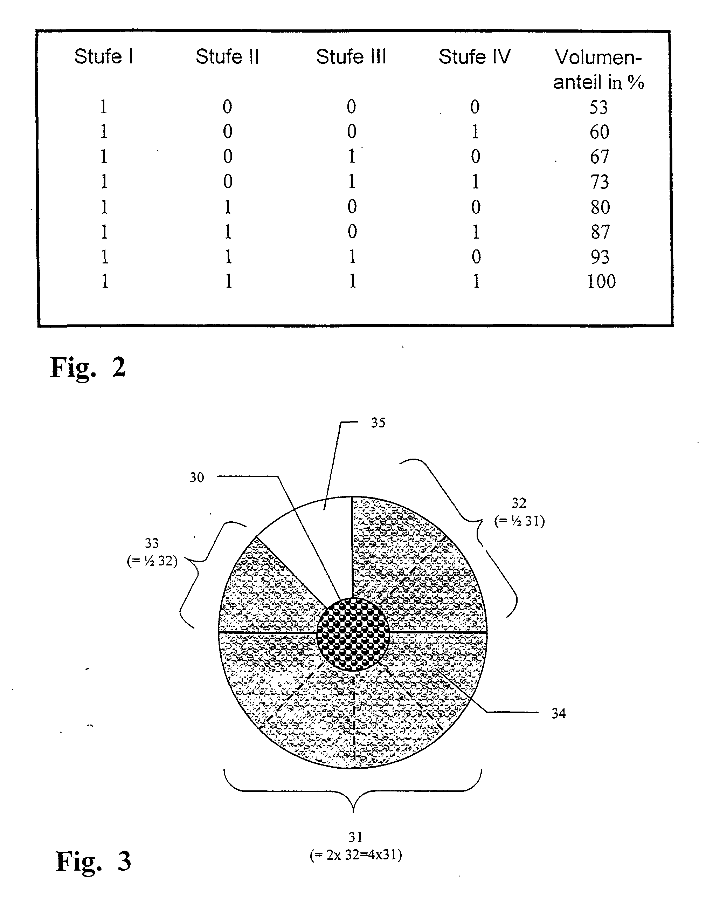

Fig. 2 zeigt, daß trotz der Einteilung des Gasgenerators 5 der Fig. 1 in vier einzelne Brennkammern durch geschickte Kombination der Aktivierung der Brennkammern der Stufen I bis IV eine nahezu stufenlose Einstellmöglichkeit von Treibgasvolumina zum Aufblasen des Airbags durchführbar ist. In der Figur symbolisieren die 1 die Aktivierung der Treibstoffladung einer Brennkammer einer jeweiligen Stufe, während eine 0 für die Nichtaktivierung eingesetzt ist. Aufgrund der acht aufgeführten Kombinationsmöglichkeiten, weil die Stufe I stets gezündet werden soll, kann ein Volumenanteil von 53% bis 100% am gesamten möglichen Treibgasvolumen aller Stufen I + II + III + IV erreicht werden. Die einzelnen Übergänge der Volumenanteile fallen nur gering aus, so daß ein feindosiertes Aufblasen des Airbags trotz der Ausbildung vier getrennter Brennkammern gewährleistet ist.

Selbstverständlich ist es grundsätzlich auch möglich, mit einem mehrstufigen Gasgenerator beispielsweise einen Mehrkammerluftsack aufzubauen. Der Mehrkammerluftsack weist beispielsweise zwei getrennte Luftkammern auf, eine kleinere A und eine größere Luftkammer B. Denkbar ist es, die kleinere Luftkammer A durch Aktivierung der Stufe II aufzublasen, wobei die Stufen III und IV gegebenenfalls dazugeschaltet werden können. Bei einem Fahrzeugunfall größeren Ausmaßes, beziehungsweise wenn die Umgebungsbedingungen es erfordern, muß auch die größere Luftkammer B des Mehrkammerluftsackes aufgeblasen werden. Dies geschieht mit der Stufe I, wobei dann gegebenenfalls die Stufen II bis IV zugeschaltet werden können.

Daraus ist zu erkennen, daß der vorgeschlagene Aufbau des mehrstufigen Gasgenerators neben einer Feindosierung auch eine große Flexibilität beim Einsatz des Gasgenerators ermöglicht. Bei einer Aktivierung der Stufen I bis IV in Abhängigkeit von externen Sensoren kann diese Feindosierung und Flexibilität noch weiter gesteigert werden. Man stelle sich eine Situation vor, daß ein schwerer Fahrer im Winter nah am Lenkrad sitzt, weil er sich durch die von unten abtauende Frontscheibe eine bessere Sicht verschaffen will. Wenn sich nun ein Fahrzeugunfall ereignet, sind die nachfolgenden Einflüsse mit Hilfe der externen Sensoren bei der Airbagentfaltung berücksichtigbar: Ein schwerer Fahrer benötigt einen Luftsack mit einer größeren Härte gegenüber einem leichteren Fahrer. Zudem muß wegen der Kälte die Gasgeneratorleistung gesteigert werden, um das durch die Kälte bedingte geringere Volumen einer entstehenden Treibgasmischung auszugleichen. Ein größeres Ausmaß des Fahrzeugunfalles erfordert ebenfalls die Erhöhung der Gasgeneratorleistung. Sitzt jedoch der Fahrer unmittelbar vor dem Lenkrad, so spricht dies für einen weniger harten Aufblasvorgang, um den Fahrer zu schützen. Würde der Fahrer in Normalposition sitzen, dann wären dagegen sämtliche Stufen I bis IV notwendig, um die volle Gasgeneratorleistung zu erzeugen. In Abhängigkeit der Nähe zum Lenkrad ist nun vorstellbar, daß die Stufe III oder IV nicht gezündet wird. Über einen Zeitverzug kann das Aufblasen des Airbags zusätzlich eingestellt werden. Während Stufe I und Stufe II gleichzeitig notwendig sind, um einen Airbag zeitig zu entfalten, könnte mit verzögerten Stufen III und IV die Härte moderater eingestellt werden. Gemäß der aufgeführten Tabelle der Fig. 2 würde der Fahrer nicht mit der vollen Schwere des Airbags, sondern nur mit ca. 2/3 des möglichen Volumens des Airbags getroffen. Die restlichen Volumenanteile könnten in einem weiteren Schub oder zwei weiteren Schüben nachgezündet werden. Die Härte des sich entfaltenden Luftsacks trifft, auch im ungünstigsten Fall, den Fahrer nicht auf einmal. Der Luftsack wird dem Körper oder dem Kopf des Fahrers portioniert entgegengehalten. Der Fahrer kann dadurch besser geschützt werden. Die Aggressivität des Aufblasvorgangs wird gemildert.

Eine weitere Ausgestaltung ist der Figur 3 zu entnehmen, bei der ein weiterer mehrstufiger Gasgenerator für einen Zwei-Kammer-Airbag vorgestellt wird. Es sind wiederum Brennkammern 31,32,33 mit binär abgestuften Treibladungen vorgesehen, d.h. die Treibgasvolumen verhalten sich wie 31≈2x32≈4x33. Diese drei Brennkammern 31,32,33 sind ringsegmentförmig angeordnet und in untereinander gleich große Volumeneinheiten 34 unterteilt, wobei die erste Stufe 4, die zwei Stufe 2 und die dritte Stufe eine Volumeneinheit 34 aufweist. Zusätzlich ist eine weitere Brennkammer 30 mit einer von der binären Abstufung abweichenden Treibladungsmenge vorgesehen. Das freie Segment 35 dient beispielsweise zur Verdrahtung der Zünder in den einzelnen Brennkammern. Die zusätzliche Brennkammer 30 wird dabei vorzugsweise zuerst bereits bei einer geringen Unfallschwere gezündet, während die Brennkammern 31,32,33 mit den binär abgestuften Treibladungen bei sich zeitlich nachfolgend verstärkenden Unfallschwere zumindest teilweise gezündet werden und die wenigstens eine weitere(n), bspw. eine zweite Airbagkammer(n) füllen. Die erste Airbagkammer wird somit ungestuft betrieben, während die zweite Airbagkammer binär abgestuft durch die Brennkammern 31,32 und 33 gefüllt werden kann. Grundsätzlich kann auch für jede Stufe eine zusätzliche Airbagkammer vorgesehen werden.

## Patentansprüche

1. Mehrstufiger Gasgenerator (5) zum Erzeugen einer zum Aufblasen eines Airbags vorgesehenen Treibgasmischung in insgesamt n≥2 Stufen (I bis IV), denen jeweils eine Brennkammer (6 bis 9) mit einer zündbaren Treibstoffladung (14) zugeordnet ist, **dadurch gekennzeichnet,**
**daß** das von den Treibstoffladungen aller n Stufen erzeugbare Treibgasvolumen in 2ⁿ-1 untereinander gleich große Volumeneinheiten (16) unterteilt ist und die Treibstoffladungen der einzelnen Stufen derart abgestuft sind, daß das von der x-ten Stufe erzeugte Treibgasvolumen näherungsweise 2^{n-x} Volumeneinheiten (16) umfaßt, wobei x∈[1...n] und x ganzzahlig ist.

2. Gasgenerator nach Anspruch 1, **dadurch gekennzeichnet, daß** die Treibstoffladung (14) der größten Brennkammer (6) zuerst zündbar ist.

3. Gasgenerator nach Anspruch 1 oder 2, **dadurch gekennzeichnet, daß** eine mit externen Sensoren verbundene Steuereinheit zur Betätigung eines oder mehrerer Anzündeeinheiten der Brennkammern (7 bis 9) vorgesehen ist.

4. Gasgenerator nach Anspruch 3, **dadurch gekennzeichnet, daß** ein Sensor zur Erfassung der Temperatur innerhalb der Brennkammer (6 bis 9) bei nicht aktivierter Treibstoffladung (14) geeignet ist.

5. Gasgenerator nach Anspruch 3 oder 4, **dadurch gekennzeichnet, daß** ein Sensor zur Erfassung des Gewichtes des Fahrzeuginsassen ausgebildet ist.

6. Gasgenerator nach einem der Ansprüche 3 bis 5, **dadurch gekennzeichnet, daß** die Steuereinheit einen Sensor zur Erfassung der Position des Fahrzeuginsassen, insbesondere des Abstands des Fahrzeuginsassen zum Airbag, umfaßt.

7. Gasgenerator nach einem der Ansprüche 3 bis 6, **dadurch gekennzeichnet, daß** ein Sensor zur Erfassung des Gurtzustands vorgesehen ist.

8. Gasgenerator nach einem der Ansprüche 3 bis 7, **dadurch gekennzeichnet, daß** ein Sensor zur Erfassung der Fahrzeuggeschwindigkeit ausgebildet ist.

9. Gasgenerator nach einem der vorangehenden Ansprüche, **dadurch gekennzeichnet, daß** zusätzlich zu den Brennkammern (31,32,33) mit binär abgestuften Treibladungen (34) eine weitere Brennkammer (30) mit einer von der binären Abstufung abweichenden Treibladungsmenge sowie eine erste Airbagkammer für die weitere zusätzliche Brennkammer (30) und wenigstens eine weitere Airbagkammer für die binär abgestuften Brennkammern (31,32,33) vorgesehen ist.

10. Gasgenerator nach Anspruch 9, **dadurch gekennzeichnet, daß** bei einer geringen Unfallschwere bereits die zusätzliche Brennkammer (30) gezündet und die erste Airbagkammer gefüllt wird und bei sich zeitlich nachfolgend verstärkenden Unfallschwere die Brennkammern (31,32,33) mit binär abgestuften Treibladungen zumindest teilweise gezündet und die weitere(n) Airbagkammer(n) gefüllt werden.

## Claims

1. Multistage gas generator (5) for generating a propellant gas mixture, provided to inflate an air bag, in a total of n≥2 stages (I to IV), with each of which there is associated a respective combustion chamber (6 to 9) with an ignitable propellant charge (14), **characterised in that** the propellant gas volume which can be generated by the propellant charges of all n stages is divided into 2ⁿ-1 unit volumes (16) of equal magnitude, and the propellant charges of the individual stages are graduated such that the propellant gas volume which is generated by the x^{th} stage comprises approximately 2^{n-x} unit volumes (16), wherein x∈[1...n] and x is an integer.

2. Gas generator according to Claim 1, **characterised in that** the propellant charge (14) of the largest combustion chamber (6) can be ignited first.

3. Gas generator according to Claim 1 or 2, **characterised in that** a control unit, which is connected to external sensors, is provided to actuate one or more ignition unit(s) of the combustion chambers (7 to 9).

4. Gas generator according to Claim 3, **characterised in that** one sensor is adapted to detect the temperature inside the combustion chamber (6 to 9) when the propellant charge (14) is not activated.

5. Gas generator according to Claim 3 or 4, **characterised in that** one sensor is formed to detect the weight of the vehicle passenger.

6. Gas generator according to any one of Claims 3 to 5, **characterised in that** the control unit comprises a sensor to detect the position of the vehicle occupant, in particular the distance of the vehicle occupant from the air bag.

7. Gas generator according to any one of Claims 3 to 6, **characterised in that** one sensor is provided to detect the state of the seat belt.

8. Gas generator according to any one of Claims 3 to 7, **characterised in that** one sensor is formed to detect the vehicle speed.

9. Gas generator according to any one of the preceding Claims, **characterised in that**, in addition to the combustion chambers (31, 32, 33) with binary graduated propellant charges (34), a further combustion chamber (30) with a propellant charge quantity which differs from the binary graduation as well as a first air bag chamber for the further additional combustion chamber (30) and at least one further air bag for the binary graduated combustion chambers (31, 32, 33) are provided.

10. Gas generator according to Claim 9, **characterised in that** the additional combustion chamber (30) is ignited and the first air bag chamber filled even in the event of a minor accident, and the combustion chambers (31, 32, 33) with binary graduated propellant charges are ignited at least in part and the further air bag chamber(s) is/are filled if the accident subsequently becomes more serious.

## Revendications

1. Générateur de gaz (5) à plusieurs niveaux pour générer un mélange de gaz combustible prévu pour le gonflage d'un airbag sur au total n ≥ 2 niveaux (I à IV), à chacun desquels est attribuée une chambre de combustion (6 à 9) avec une charge de combustible (14) inflammable, **caractérisé en ce que**, le volume de combustible pouvant être généré par les charges combustibles de tous les n niveaux est subdivisé en 2ⁿ-1 unités de volume (16) de grandeur identique entre elles et les charges de combustible des différents niveaux sont échelonnées de telle sorte que le volume de combustible généré par le x-ième niveau comprend approximativement de 2^{n-x} unités de volume (16), x ∈ [1...n] et x étant un nombre entier.

2. Générateur de gaz selon la revendication 1, **caractérisé en ce que** la charge de combustible (14) de la chambre de combustion (6) la plus grande peut être enflammée en premier.

3. Générateur de gaz selon la revendication 1 ou 2, **caractérisé en ce qu'**une unité de commande reliée à des capteurs externes est prévue pour l'actionnement d'une ou de plusieurs unités d'allumage des chambres de combustion (7 à 9).

4. Générateur de gaz selon la revendication 3, **caractérisé en ce qu'**un capteur est approprié pour l'enregistrement de la température à l'intérieur de la chambre de combustion (6 à 9) dans le cas d'une charge de combustible (14) non activée.

5. Générateur de gaz selon la revendication 3 ou 4, **caractérisé en ce qu'**un capteur est réalisé pour l'enregistrement du poids du passager du véhicule.

6. Générateur selon l'une quelconque des revendications 3 à 5, **caractérisé en ce que** l'unité de commande comprend un capteur pour l'enregistrement de la position du passager du véhicule, et en particulier de la distance du passager de véhicule à l'airbag.

7. Générateur de gaz selon l'une quelconque des revendications 3 à 6, **caractérisé en ce qu'**un capteur est prévu pour l'enregistrement de l'état de la sangle.

8. Générateur de gaz selon l'une quelconque des revendications 3 à 7, **caractérisé en ce qu'**un capteur est réalisé pour l'enregistrement de la vitesse du véhicule.

9. Générateur de gaz selon l'une quelconque des revendications précédentes, **caractérisé en ce que**, en supplément des chambres de combustion (31, 32, 33) avec des charges combustibles (34) échelonnées de façon binaire, il est prévu une autre chambre de combustion (30) avec une quantité de charge combustible différente de l'échelonnement binaire et une première chambre d'airbag pour l'autre chambre de combustion (30) supplémentaire et au moins une autre chambre d'airbag pour les chambres de combustion (31, 32, 33) échelonnées de façon binaire.

10. Générateur de gaz selon la revendication 9, **caractérisé en ce que**, avec une gravité d'accident faible, la chambre de combustion (30) est déjà allumée et la première chambre d'airbag est remplie et, avec une gravité d'accident variante de façon successive dans le temps, les chambres de combustion (31, 32, 33) avec des charges combustibles échelonnées de façon binaire sont allumées au moins partiellement et l'autre (les autres) chambre(s) d'airbag est (sont) remplie(s).
